# EUROPÄISCHE PATENTSCHRIFT

(11) **EP 0 871 783 B1**
(45) Veröffentlichungstag und Bekanntmachung des Hinweises auf die Patenterteilung: **21.02.2001**
(21) Anmeldenummer: 97910151.6
(22) Anmeldetag: 05.11.1997
(51) Int. Cl.: C21B 13/14

(54) **VERFAHREN ZUM HERSTELLEN VON EISENSCHWAMM**
PROCESS FOR PRODUCING SPONGE IRON
PROCEDE DE PRODUCTION D'EPONGE DE FER

(30) Priorität: 06.11.1996 AT 193296
(43) Veröffentlichungstag der Anmeldung: 21.10.1998
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Leopold, Werner, A-4060 Leonding (AT); WALLNER, Felix, A-4020 Linz (AT); GENNARI, Udo, A-4020 Linz (AT)
(74) Vertreter: Schwarz, Albin, Dr.
(86) Internationale Anmeldenummer: AT9700238
(87) Internationale Veröffentlichungsnummer: WO9820172

(56) Entgegenhaltungen:
- EP-A- 0 094 707
- EP-A- 0 179 734
- DE-A- 4 426 623
- US-A- 4 111 687
- US-A- 4 578 110
- US-A- 5 338 336
- US-A- 5 413 622

## Beschreibung

Die Erfindung betrifft ein Verfahren zum Herstellen von Eisenschwamm durch Direktreduktion von teilchenförmigem, eisenoxidhältigem Material, wobei Reduktionsgas, welches in einer Einschmelzvergasungszone aus Kohlenstoffträgern und sauerstoffhältigem Gas gebildet wird, in eine Reduktionszone, in welcher sich das eisenoxidhältige Material befindet, eingeleitet wird.

Aus der EP-A - 0 594 557 ist ein Verfahren zur Herstellung von flüssigem Roheisen aus von Eisenerzen und Zuschlägen gebildeten, zumindest teilweise einen Feinanteil aufweisenden Einsatzstoffen bekannt, wobei die Einsatzstoffe in mindestens einer Reduktionszone zu Eisenschwamm direkt reduziert werden, der Eisenschwamm in einer Einschmelzvergasungszone unter Zufuhr von Kohlenstoffträgern und sauerstoffhältigem Gas erschmolzen und ein Reduktionsgas erzeugt wird, welches in die Reduktionszone eingeleitet, dort umgesetzt und als Exportgas abgezogen wird. Mit diesem Verfahren ist der Einsatz von Feinerz in wirtschaftlicher Weise möglich, indem vorwiegend hämatitische und/oder magnetitische Feinerze und/oder Erzstäube in einer Vorwärmzone einer Vorwärmung im Wirbelschichtverfahren unterzogen werden und die so vorgewärmten Einsatzstoffe in mindestens einer nachgeordneten Reduktionszone im Wirbelschichtverfahren weitgehend fertigreduziert werden, worauf die Einsatzstoffe mittels einer Zwangsförderung in das Fließbett der Einschmelzvergasungszone chargiert und dort erschmolzen werden.

Ein Verfahren der eingangs erwähnten Art ist auch aus der EP-A - 0 217 331 bekannt. Bei diesem Verfahren wird zur Direktreduktion von Feinerz ein Gas verwendet, welches im wesentlichen CO und H₂ enthält und in einem Zyklon entstaubt wurde.

Durch Direktreduktion von eisenoxidhältigem Material gemäß diesem Stand der Technik hergestellter Eisenschwamm weist in der Regel einen niedrigen Kohlenstoffgehalt in der Höhe von etwa 1 % auf. Für die Weiterverarbeitung des Eisenschwammes ist jedoch ein erhöhter Kohlenstoffgehalt von Vorteil, um beim Einschmelzen des Eisenschwammes und beim anschließenden Frischprozeß Energie einsparen zu können, ohne daß eine separate Kohlenstoffzugabe (Aufkohlung) erforderlich ist.

Die Erfindung stellt sich daher die Aufgabe, ein Verfahren gemäß der eingangs beschriebenen Art dahingehend zu modifizieren, daß der Eisenschwamm einen erhöhten Kohlenstoffgehalt, vorzugsweise in der Größenordnung zwischen 1 und 4 %, insbesondere über 2,5 %, aufweist.

Diese Aufgabe wird erfindungsgemäß durch die Kombination folgender Merkmale gelöst:
- in die Reduktionszone wird ein Reduktionsgas eingeleitet, welches pro Nm³ zwischen 20 und 100 g Staub enthält, der einen Kohlenstoffgehalt zwischen 30 und 70 Masse% aufweist, und
- das eisenoxidhältige Material wird über eine Zeitdauer, die über die zur Fertigreduktion erforderliche Zeit hinausgeht, dem Reduktionsgas ausgesetzt.

Die Herstellung von Eisenschwamm mit einem Kohlenstoffgehalt zwischen 0,5 und 2,5 % ist aus der WO-A - 93/14228 bereits bekannt, u.zw. werden bei diesem bekannten Verfahren kleine Mengen von Erdgas zur Kohlenstoffeinstellung herangezogen, wobei das Erdgas direkt in einen Wirbelschichtreaktor eingebracht wird. Alleine diese Maßnahme ist jedoch wenig effizient, da ein gänzlicher Zerfall des Erdgases bei den bei der Direktreduktion vorgesehenen Reduktionstemperaturen nicht gesichert ist.

Aus der US-A - 5,137,566 ist es bekannt, hochkonzentriertes Eisenkarbid aus Eisenerz mit Hilfe von Reduktionsgas und Aufkohlungsgas herzustellen, wobei infolge der Zeitabhängigkeit der Eisenkarbidbildung eine höhere Verweilzeit für die Umsetzung angestrebt wird. Alleine die Erhöhung der Verweilzeit des eisenoxidhältigen Materials bei einer Direktreduktion bedingt einen beträchtlichen Produktionsrückgang, d.h. einen wesentlich verringerten Ausstoß an reduziertem Material pro Zeiteinheit. Dieses Verfahren ist daher relativ aufwendig und das so hergestellte Eisenkarbid wird dementsprechend nur als Zusatz für die Stahlherstellung eingesetzt, wogegen erfindungsgemäß als Aufgabe gestellt ist, daß der gesamte für die Stahlherstellung eingesetzte Eisenschwamm einen erhöhten Kohlenstoffgehalt aufweist, d.h. dieser so hergestellte Eisenschwamm mit erhöhtem Kohlenstoffgehalt wird nicht nur als Zusatz für die Stahlherstellung verwendet, sondern bildet selbst den Basisstoff hierzu.

Aus der US-A - Re-32,247 ist es bekannt, eisenoxidhältiges Material in einer ersten Stufe zu Eisenkarbid umzusetzen und in einer zweiten Stufe direkt aus dem Eisenkarbid Stahl zu erzeugen. Bei diesem bekannten Verfahren wird ein wasserstoffhältiges Reduktionsgas für die Reduktion und ein kohlenstoffhältiges Material zur Bildung von Eisenkarbid eingesetzt. Nachteilig ist hierbei die vollständige Umsetzung des Eisens zu Eisenkarbid, da dies ebenfalls mit einem hohen Energieaufwand (hoher Verbrauch an kohlenstoffhältigem Material bei der Direktreduktion) verbunden ist.

Erfindungsgemäß wird zur Reduktion des Feinerzes ein Reduktionsgas, das in einem Einschmelzvergaser gebildet wird, verwendet, wobei dessen Staubgehalt pro Nm³ zwischen 20 und 100 g beträgt, wobei der Staub einen Kohlenstoffgehalt zwischen 30 und 70 Masse% aufweist. Staubgehalt und Kohlenstoffgehalt können mit einem Heißgaszyklon und mit dem Kohlenstoffträger bzw. durch Zumischen von beispielsweise Hüttenkoks, Koksgrus oder Petrolkoks in den Einschmelzvergaser eingestellt werden. Es können auch Mischungen von Kohlen eingesetzt werden, die eine verschieden hoch ausgeprägte Neigung zum Kornzerfall (Decrepitation) aufweisen. Das fertigreduzierte Feinerz wird diesem speziellen Reduktionsgas so lange ausgesetzt, bis der gewünschte Kohlenstoffgehalt erreicht ist. Die Erfindung beruht auf der Erkenntnis, daß der Kohlenstoffgehalt des fertigreduzierten Feinerzes exponentiell ansteigt, wenn es über die zur Fertigreduktion erforderliche Zeit hinaus dem speziellen Reduktionsgas ausgesetzt wird.

Das in die Reduktionszone eingeleitete Reduktionsgas enthält bevorzugt per Nm³ zwischen 40 und 90 g Staub.

Eine weitere bevorzugte Ausgestaltung des erfindungsgemäßen Verfahren besteht darin, daß der im Reduktionsgas enthaltene Staub einen Kohlenstoffgehalt zwischen 45 und 55 Masse% aufweist.

Beim erfindungsgemäßen Verfahren kann die Direktreduktion in zwei oder mehreren hintereinander geschalteten Wirbelschichtreaktoren durchgeführt werden und das Reduktionsgas in den in Flußrichtung des eisenoxidhältigen Materials letzten Wirbelschichtreaktor eingeleitet werden und durchströmt diesen sowie nachfolgend auch die anderen Wirbelschichtreaktoren im Gegenstrom zum eisenoxidhältigen Material.

Die Erhöhung des Kohlenstoffgehaltes im Eisenschwamm kann erzielt werden, indem die Verweilzeit an eisenoxidhältigem Material bei der Direktreduktion gegenüber der zur Fertigreduktion dieses Materials notwendigen Mindest-Verweilzeit verlängert ist.

Die Erhöhung des Kohlenstoffgehaltes kann zweckmäßigerweise aber auch erzielt werden, indem die Reduktion mit einer spezifischen Menge an Reduktionsgas, die gegenüber der für die Fertigreduktion des eisenoxidhältigen Materials notwendigen spezifischen Mindest-Gasmenge erhöht ist, durchgeführt wird.

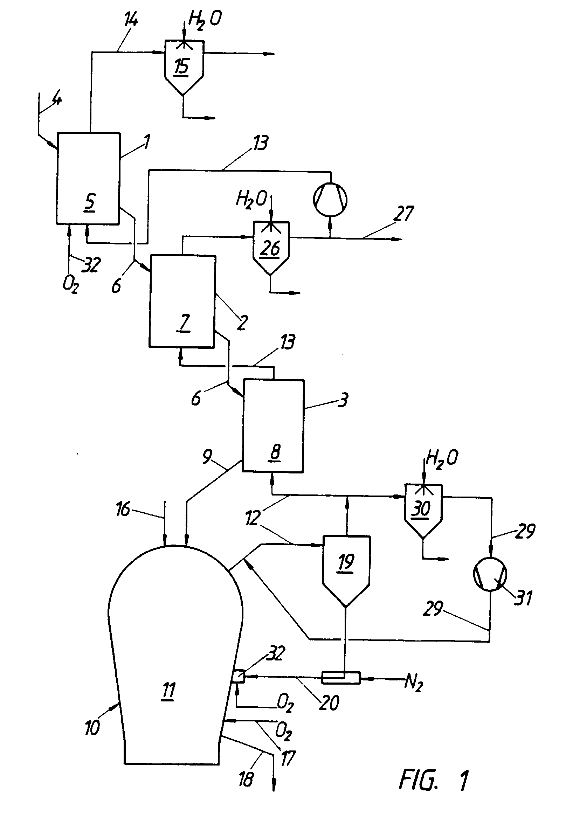

Die Erfindung ist nachfolgend anhand eines in der Zeichnung dargestellten Ausführungsbeispieles näher erläutert, wobei die Figur 1 eine Anlage zeigt, in welcher eine vorteilhafte Variante des erfindungsgemäßen Verfahrens durchgeführt werden kann.

Die Anlage weist drei in Serie hintereinander geschaltete Wirbelschichtreaktoren 1 bis 3 auf, wobei Feinerz über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. In dem Wirbelschichtreaktor 2 erfolgt in einer Vor-Reduktionsstufe 7 eine Vorreduktion und im Wirbelschichtreaktor 3 in einer End-Reduktionsstufe 8 eine End-Reduktion des Feinerzes zu Eisenschwamm.

Das fertigreduzierte Material, also der Eisenschwamm, wird über eine Förderleitung 9 in einen Einschmelzvergaser 10 geleitet. Im Einschmelzvergaser 10 wird in einer Einschmelzvergasungszone 11 aus Kohle und sauerstoffhältigem Gas ein Reduktionsgas erzeugt, welches CO, H₂ und kohlenstoffhältigen Staub enthält und in der Reduktionsgas-Zuleitung 12 über einen Heißzyklon 19 in den in Fließrichtung des Feinerzes letztangeordneten Wirbelschichtreaktor 3 eingeleitet wird. Das Reduktionsgas wird dann im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Topgas über eine Topgas-Ableitung 14 abgeleitet und anschließend in einem Naßwäscher 15 gekühlt und gewaschen.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist ein Heißgaszyklonl9 vorgesehen, der dazu dient, den im Reduktionsgas erfindungsgemäß vorzusehenden Staubgehalt einzustellen, wobei die in diesem Zyklon abgeschiedenen Staubteile dem Einschmelzvergaser 10 über die Rückleitung 20 mit Stickstoff als Fördermittel und über einen Brenner 32 unter Einblasen von Sauerstoff zugeführt werden.

Der Wirbelschichtreaktor 2, in dem die Vorreduktion des Feinerzes stattfindet, wird mit der gleichen Menge an Reduktionsgas, das aber ein geringeres Reduktionspotential aufweist, versorgt, was jedoch für die Vor-Reduktion durchaus ausreichend ist. Da hier der erreichte Reduktionsgrad des zu reduzierenden Materials niedriger ist als in der End-Reduktionsstufe 8, tritt somit hier auch kein "sticking" auf. Das aus diesem Wirbelschichtreaktor 2 austretende umgesetzte Reduktionsgas wird über die Leitung 13 einem Wäscher 26 zugeführt. Ein Teil des gewaschenen umgesetzten Reduktionsgases wird über eine Exportgas-Ableitung 27 abgezogen; ein anderer Teil der Vorerwärmungsstufe 5, d.h. dem Wirbelschichtreaktor 1, über die Leitung 13 zugeführt.

Eine Möglichkeit zur Einstellung der Reduktionsgastemperatur, die 750 - 950°C, vorzugsweise 800 - 850°C, sein sollte, ergibt sich durch die vorzugsweise vorgesehene Gasrückführleitung 29, die von der Reduktionsgas-Zuleitung 12 ausgeht und einen Teil des Reduktionsgases über einen Wäscher 30 und einen Verdichter 31 in diese Reduktionsgas-Zuleitung 12 wiederum zurückführt, u.zw. vor der Anordnung des Heißgaszyklons 19.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 32 zugeführt werden, wodurch eine Teilverbrennung des der Vorerwärmungsstufe 5 zugeführten umgesetzten Reduktionsgases stattfindet. Durch Steuerung der Teilverbrennung läßt sich die Temperatur des Feinerzes bei der Vorerwärmung derart einstellen, daß die Temperaturen in den nachfolgenden Reduktionsstufen 7, 8 optimiert sind.

Die Erfindung beschränkt sich nicht auf das in der Zeichnung dargestellte Ausführungsbeispiel, sondern kann in verschiedener Hinsicht modifiziert werden. Beispielsweise ist es möglich, die Anzahl der Wirbelschichtreaktoren je nach den Erfordernissen zu wählen.

### Beispiel:

In einer der Fig. 1 der Zeichnung entsprechenden Anlage werden zur Erzeugung von 40 t Roheisen/h dem Einschmelzvergaser 10 31,4 t Kohle/h mit der in Tabelle I angegebenen chemischen Zusammensetzung chargiert und mit 31.240 Nm³ O₂/h vergast.

**Tabelle I**

| Kohle (trocken) | |
|---|---|
| C | 78,9 % |
| H | 3,8 % |
| N | 1,0% |
| O | 2,0 % |
| Asche | 8,7 % |
| C_{fix} | 72,0 % |

In die Anlage wird Feinerz (Hämatit; Korngröße < 8 mm) in einer Menge von 58,6 t/h mit der in Tabelle II angegebenen Erzanalyse und werden Zuschläge in einer Menge von 8,6 t/h gemäß Tabelle III chargiert.

**Tabelle II**

| Erz (feucht) | |
|---|---|
| Fe | 62,8 % |
| Fe₂O₃ | 87,7 % |
| LOI | 0,08 % |
| Feuchte | 2,0 % |

**Tabelle III**

| Zuschläge | |
|---|---|
| CaO | 45,2 % |
| MgO | 9,3 % |
| SiO₂ | 1,2 % |
| Al₂O₃ | 0,7 % |
| Glühverluste | 39,1 % |

Im Einschmelzvergaser 10 wird Reduktionsgas in einer Menge von 63.440 Nm³/h und einer Temperatur von 1000 bis 1200°C hergestellt. Dieses Gas wird dem Einschmelzvergaser 10 entnommen und durch Zumischen von im Wäscher 30 abgekühltem Reduktionsgas auf eine Temperatur von 800°C eingestellt. Nach Verlassen des Zyklons 19 besitzt das Reduktionsgas die in der Tabelle IV angegebene Zusammensetzung.

**Tabelle IV**

| Reduktionsgas für End-Reduktionsstufe 8, 800°C | |
|---|---|
| CO | 62 % |
| CO₂ | 5 % |
| H₂ | 28 % |
| N₂ | 5 % |
| Staub | 80 g/Nm³ |
| C-Gehalt des Staubes | 50 % |

**Tabelle V**

| Reduktionsgas für Vor-Reduktionsstufe 7 800°C | |
|---|---|
| CO | 52 % |
| CO₂ | 19% |
| H₂ | 24 % |
| N₂ | 5 % |

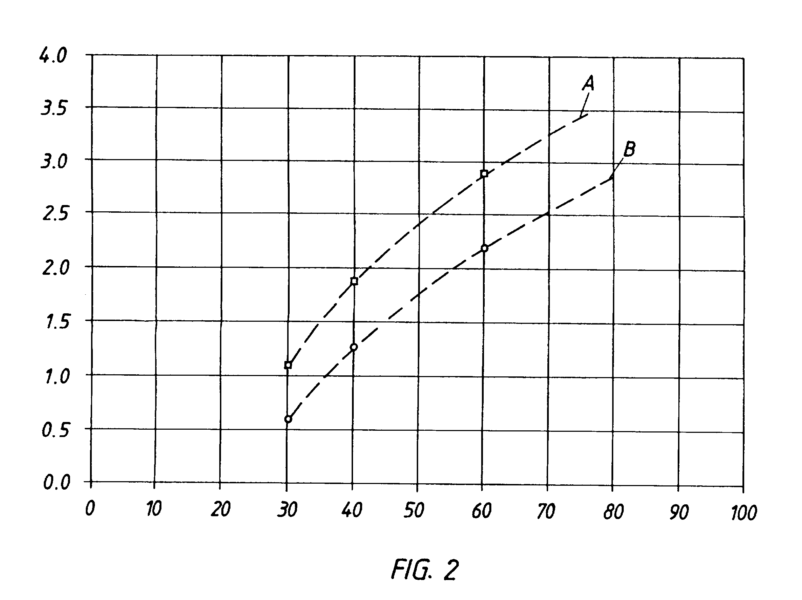

Durch Einstellung der Verweilzeit dieses Reduktionsgases in der End-Reduktionsstufe 8 kann der Kohlenstoffgehalt im Eisenschwamm eingestellt werden. Der Zusammenhang zwischen Verweilzeit und Kohlenstoffgehalt ist in der Fig. 2 dargestellt, wobei die Abszisse die Verweilzeit in Minuten und die Ordinate den Kohlenstoffgehalt des Eisenschwammes in Masse% angibt.

In der Fig. 2 bezieht sich der Graph A auf einen spezifischen Reduktionsgasverbrauch von 1500 Nm³/t Erz. Der Graph B bezieht sich auf eine spezifische Reduktionsgasrate von 1200 Nm³/t Erz. Der Fig. 2 ist somit zu entnehmen, daß der Kohlenstoffgehalt des Eisenschwammes sowohl mit der Verweilzeit als auch mit dem spezifischen Reduktionsgasverbrauch ansteigt.

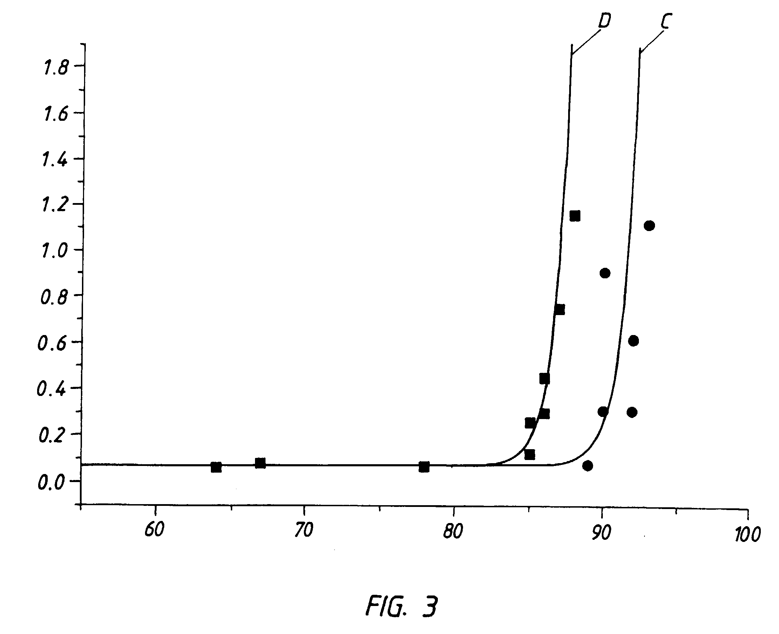

Es hat sich gezeigt, daß die höheren Kohlenstoffgehalte erst erreichbar sind, wenn das Feinerz fertigreduziert ist und anschließend noch länger dem Reduktionsgas ausgesetzt wird. Der Zusammenhang zwischen Reduktionsgrad und dem Kohlenstoffgehalt des Eisenschwammes ist in Fig. 3 dargestellt, wobei der Reduktionsgrad (Fe_{Met}/Fe_{gesamt}) in % als Abszisse und der Kohlenstoffgehalt (Masse%) als Ordinate aufgetragen sind. Der Graph C bezieht sich auf eine Reduktion bei 850°C und der Graph D bezieht sich auf eine Reduktion bei 800°C.

Der Fig. 3 ist zu entnehmen, daß der Kohlenstoffgehalt erst dann ansteigt, wenn das Erz fertigreduziert ist, wobei unter "Fertigreduktion" jener Reduktionsgrad verstanden wird, der unter den jeweiligen Reduktionsbedingungen maximal erreichbar ist. Der Graph C zeigt, daß das bei 850°C fertigreduzierte Erz einen Reduktionsgrad von etwa 90 bis 92 % aufweist, wogegen der Graph D zeigt, daß das bei 800°C fertigreduzierte Erz einen Reduktionsgrad von etwa 85 bis 87 % aufweist. Bleibt nun dieses fertigreduzierte Erz noch länger mit dem erfindungsgemäß verwendeten Reduktionsgas in Kontakt, so steigt der Reduktionsgrad nur noch unwesentlich an, wogegen der Kohlenstoffgehalt aber stark ansteigt. Auf diese Weise ist es somit möglich, Eisenschwamm mit erhöhtem Kohlenstoffgehalt herzustellen.

## Patentansprüche

1. Verfahren zum Herstellen von Eisenschwamm durch Direktreduktion von teilchenförmigem, eisenoxidhältigem Material, wobei Reduktionsgas, welches in einer Einschmelzvergasungszone aus Kohlenstoffträgern und sauerstoffhältigem Gas gebildet wird, in eine Reduktionszone, in welcher sich das eisenoxidhältige Material befindet, eingeleitet wird, gekennzeichnet durch die Kombination folgender Merkmale:
• in die Reduktionszone wird ein Reduktionsgas eingeleitet, welches pro Nm³ zwischen 20 und 100 g Staub enthält, der einen Kohlenstoffgehalt zwischen 30 und 70 Masse% aufweist, und
• das eisenoxidhältige Material wird über eine Zeitdauer, die über die zur Fertigreduktion erforderliche Zeit hinausgeht, dem Reduktionsgas ausgesetzt.

2. Verfahren nach Anspruch 1, dadurch gekennzeichnet, daß das in die Reduktionszone eingeleitete Reduktionsgas pro Nm³ zwischen 40 und 90 g Staub enthält.

3. Verfahren nach Anspruch 1 oder 2, dadurch gekennzeichnet, daß der im Reduktionsgas enthaltene Staub einen Kohlenstoffgehalt zwischen 45 und 55 Masse% aufweist.

4. Verfahren nach einem oder mehreren der Ansprüche 1 bis 3, dadurch gekennzeichnet, daß die Direktreduktion in zwei oder mehreren hintereinander geschalteten Wirbelschichtreaktoren (1, 2, 3) durchgeführt wird und das Reduktionsgas in den in Flußrichtung des eisenoxidhältigen Materials letzten Wirbelschichtreaktor (3) eingeleitet wird und diesen sowie nachfolgend auch die anderen Wirbelschichtreaktoren (2, 1) im Gegenstrom zum eisenoxidhältigen Material durchströmt.

5. Verfahren nach einem oder mehreren der Ansprüche 1 bis 4, dadurch gekennzeichnet, daß die Verweilzeit bei der Direktreduktion gegenüber der zur Fertigreduktion des eisenoxidhältigen Materials notwendigen Mindest-Verweilzeit verlängert ist.

6. Verfahren nach einem oder mehreren der Ansprüche 1 bis 5, dadurch gekennzeichnet, daß die Reduktion mit einer spezifischen Menge an Reduktionsgas, die gegenüber der für die Fertigreduktion des eisenoxidhältigen Materials notwendigen spezifischen Mindest-Gasmenge erhöht ist, durchgeführt wird.

## Claims

1. A process for producing sponge iron by directly reducing particulate, iron-oxide-containing material, wherein reducing gas that is formed from carbon carriers and an oxygen-containing gas in a melt-down gasifying zone is introduced into a reduction zone that contains the iron-oxide-containing material, characterized by the combination of the following characteristic features:
• to the reduction zone, a reducing gas is fed which contains between 20 and 100 g per Nm³ of a dust having a carbon content of between 30 and 70% by mass, and
• the iron-oxide-containing material is exposed to the reducing gas for a time period that exceeds the period required for complete reduction.

2. A process according to claim 1, characterized in that the reducing gas fed to the reduction zone contains between 40 and 90 g dust per Nm³.

3. A process according to claim 1 or 2, characterized in that the dust contained in the reducing gas has a carbon content of between 45 and 55% by mass.

4. A process according to one or several of claims 1 to 3, characterized in that direct reduction is carried out in two or several subsequently connected fluidized bed reactors (1, 2, 3) and the reducing gas is fed to the fluidized bed reactor (3) arranged last in the direction of flow of the iron-oxide-containing material and passes through that and subsequently also through the other fluidized bed reactors (2, 1) in counterflow to the iron-oxide-containing material.

5. A process according to one or several of claims 1 to 4, characterized in that in the direct reduction operation the residence time is extended as compared to the minimum residence time required for completely reducing the iron-oxide-containing material.

6. A process according to one or several of claims 1 to 5, characterized in that reduction is carried out with a specific amount of reducing gas that is increased as compared to the specific minimum amount of gas required for completely reducing the iron-oxide-containing material.

## Revendications

1. Procédé destiné à la fabrication d'éponge de fer par réduction directe de matériau à l'état de particules contenant de l'oxyde de fer, du gaz de réduction, généré dans une zone de gazéification à fusion à partir de matières à base de carbone et de gaz contenant de l'oxygène, étant introduit dans une zone de réduction dans laquelle se trouve le matériau contenant de l'oxyde de fer, caractérisé par la combinaison des particularités suivantes :
• dans la zone de réduction, il est introduit un gaz de réduction contenant entre 20 et 100 g de poussière par Nm³ dont la teneur en carbone est comprise entre 30 et 70 % en masse, et
• le matériau contenant de l'oxyde de fer est exposé au gaz de réduction pendant une durée de temps supérieure à celle qui est nécessaire à la réduction finale.

2. Procédé selon la revendication 1, caractérisé en ce que le gaz de réduction introduit dans la zone de réduction contient entre 40 et 90 g de poussière par Nm³.

3. Procédé selon la revendication 1 ou 2, caractérisé en ce que la poussière contenue dans le gaz de réduction a une teneur en carbone qui est comprise entre 45 et 55 % en masse.

4. Procédé selon l'une ou plusieurs des revendications 1 à 3, caractérisé en ce que la réduction directe est effectuée dans deux ou plusieurs réacteurs à couche fluidisée (1, 2, 3) couplés en série, et en ce que le gaz de réduction est introduit dans le sens du flux du matériau contenant de l'oxyde de fer dans le dernier réacteur à couche fluidisée (3), et traverse celui-ci, ainsi qu'ensuite également les autres réacteurs à couche fluidisée (2, 1), à contre-courant du matériau contenant de l'oxyde de fer.

5. Procédé selon l'une ou plusieurs des revendications 1 à 4, caractérisé en ce que le temps de séjour lors de la réduction directe est prolongé par rapport au temps de séjour minimal nécessaire à la réduction finale du matériau contenant de l'oxyde de fer.

6. Procédé selon l'une ou plusieurs des revendications 1 à 5, caractérisé en ce que la réduction est effectuée avec une quantité spécifique en gaz de réduction, qui est augmentée par rapport à la quantité spécifique minimale de gaz nécessaire à la réduction finale du matériau contenant de l'oxyde de fer.
